# EUROPEAN PATENT APPLICATION

(11) **EP 4 053 735 A1**
(43) Date of publication of application: **07.09.2022**
(21) Application number: 20893213.7
(22) Date of filing: 22.10.2020
(51) Int. Cl.: G06K 9/00, H04N 7/18

(54) **METHOD FOR STRUCTURING PEDESTRIAN INFORMATION, DEVICE, APPARATUS AND STORAGE MEDIUM**

(30) Priority: 27.11.2019 CN 201911181202
(71) Applicant: ZTE Corporation, Shenzhen, Guangdong 518057 (CN)
(72) Inventor: FU, Hailing, Shenzhen, Guangdong 518057 (CN); XU, Qian, Shenzhen, Guangdong 518057 (CN); WANG, Yijin, Shenzhen, Guangdong 518057 (CN)
(74) Representative: Savi, Massimiliano
(86) International application number: PCT/CN2020/122938
(87) International publication number: WO 2021/103868

(57) **Abstract**

A method for structuring pedestrian information, device, apparatus and a storage medium are disclosed. The method may include: obtaining target image data including at least one video image frame; performing human face and shape detection on the target image data by means of a preset target detection model to determine target detection information, the target detection model being a depth detection model configured to simultaneously detect a human shape and a human face; and respectively performing trajectory tracking and attribute analysis based on the target detection information to determine pedestrian trajectory tracking information and pedestrian attribute information.

## Description

### CROSS-REFERENCE TO RELATED APPLICATION

This application is filed on the basis of the Chinese Patent Application No. 201911181202.X filed on November 27, 2019, and claims priority of the Chinese patent application, the entire contents of which are incorporated herein by reference.

### TECHNICAL FIELD

Embodiments of the present disclosure relate to the field of artificial intelligence technology, and more particularly, to a method, a device, an apparatus and a storage medium for structuring pedestrian information.

### BACKGROUND

In recent years, with the continuous development of intelligent recognition technologies, intelligent video surveillance has played an increasingly important role in many fields such as security and intelligent transportation. Cameras can uninterruptedly record all information within the field of view. However, videos generated by the cameras are unstructured data, in which targets can only be viewed visually, rather than directly read and recognized by computers.

Pedestrians are focuses of video surveillance systems. Pedestrian structuring refers to extracting pedestrian-related information from video contents, transforming the information into machine-understandable information, and further transforming the machine-understandable information into intelligence. In this way, transformation from video data to information and intelligence is implemented. The pedestrian-related description information may include pedestrian location, facial location, facial features, pedestrian gender, age range, and movement trajectory, etc.

At present, there are more and more monitored video data, and the massive amount of data brings huge computational load and complex and changeable scenes, which has higher and higher requirements for robustness and performance of systems for structuring pedestrian information. Most of the current systems for structuring pedestrian information use independent models to analyze and recognize each module of the systems. For example, a detection part adopts a detection model, attribute analysis adopts a classification model, and trajectory tracking adopts a tracking model. The same module may also adopt different models to analyze different sub-tasks, such as utilizing pedestrian detection models and human face detection models for localization, respectively. Intuitively, using different models for different analysis tasks may better adapt to unique nature of each task, resulting in higher accuracy. However, the above recognition methods ignore commonalities between different tasks, which may lead to huge resource overhead and performance bottlenecks, making recognition of pedestrian data unable to meet requirements for real-time performance and accuracy.

### SUMMARY

Embodiments of the present disclosure provide a method a device, an apparatus and a storage medium for structuring pedestrian information.

The embodiments of the present disclosure provide a method for structuring pedestrian information, including: obtaining target image data including at least one video image frame; performing human face and shape detection on the target image data by means of a preset target detection model to determine target detection information, the target detection model being a deep detection model configured to simultaneously detect a human shape and a human face; and respectively performing trajectory tracking and attribute analysis based on the target detection information to determine pedestrian trajectory tracking information and pedestrian attribute information.

The embodiments of the present disclosure further provides a device for structuring pedestrian information, including: a data obtaining module, configured to obtain target image data including at least one video image frame; a pedestrian detection module, configured to perform human face and shape detection on the target image data by means of a preset target detection model to determine target detection information, the target detection model being a deep detection model configured to simultaneously detect a human shape and a human face; and a trajectory tracking and attribute analysis module, configured to respectively perform trajectory tracking and attribute analysis based on the target detection information to determine pedestrian trajectory tracking information and pedestrian attribute information.

In an embodiment, the data obtaining module is configured to perform following step.

Original video data is obtained and decoded to obtain the target image data.

In an embodiment, the pedestrian detection module includes the following a feature extraction unit and a detection unit.

The feature extraction unit is configured to perform feature extraction on the target image data to obtain a target feature map.

The detection unit is configured to classify and locate the target feature map by means of a target anchor box to determine the target detection information. A size of the target anchor box is adaptively adjusted based on a human face and shape location relationship.

In an embodiment, the pedestrian detection module further includes a feature fusion unit.

The feature fusion unit is configured to perform feature extraction on the target image data, and perform, after obtaining a target feature map, feature fusion on the target feature map by means of a feature pyramid to determine a feature fusion map.

In an embodiment, the detection unit is configured to perform the following steps.

The target feature map or the feature fusion map is converted into a three-channel heat map.

Then, the three-channel heat map is classified and located by means of the target anchor box to determine the target detection information.

In an embodiment, the trajectory tracking and attribute analysis module includes a trajectory tracking unit.

The trajectory tracking unit is configured to perform, after fusing color features for the target detection information and the target feature map, trajectory tracking based on a generalized intersection over union (IoU) algorithm to determine the pedestrian trajectory tracking information.

In an embodiment, the trajectory tracking and attribute analysis module includes an attribute analysis unit.

The attribute analysis unit is configured to determine a target image based on the target detection information, and perform, after performing backdrop filtering on the target image, recognition and regression operations by means of an attribute analysis model to determine the pedestrian attribute information.

The embodiments of the present disclosure also provide an apparatus, which includes: one or more processors; and a memory, configured to store one or more programs. The one or more programs, when executed by the one or more processors, cause the one or more processors to carry out the method for structuring pedestrian information as described above.

The embodiments of the present disclosure further provide a computer-readable storage medium storing a computer program which, when executed by a processor, causes the processor to carry out the above method for structuring pedestrian information.

### BRIEF DESCRIPTION OF DRAWINGS

FIG. 1 is a flowchart of a method for structuring pedestrian information according to an embodiment of the present disclosure;
FIG. 2 is a flowchart of another method for structuring pedestrian information according to an embodiment of the present disclosure;
FIG. 3 is a flowchart of yet another method for structuring pedestrian information according to an embodiment of the present disclosure;
FIG. 4 is a schematic structural diagram of a device for structuring pedestrian information according to an embodiment of the present disclosure; and
FIG. 5 is a schematic structural diagram of an apparatus according to an embodiment of the present disclosure.

### DETAILED DESCRIPTION

The present disclosure will be further described below in detail in conjunction with the accompanying drawings and the embodiments. It should be understood that the embodiments set forth herein are merely intended to interpret, rather than limit, the present disclosure. In addition, it should be noted that for ease of description, drawings merely show parts related to the present disclosure instead of all parts.

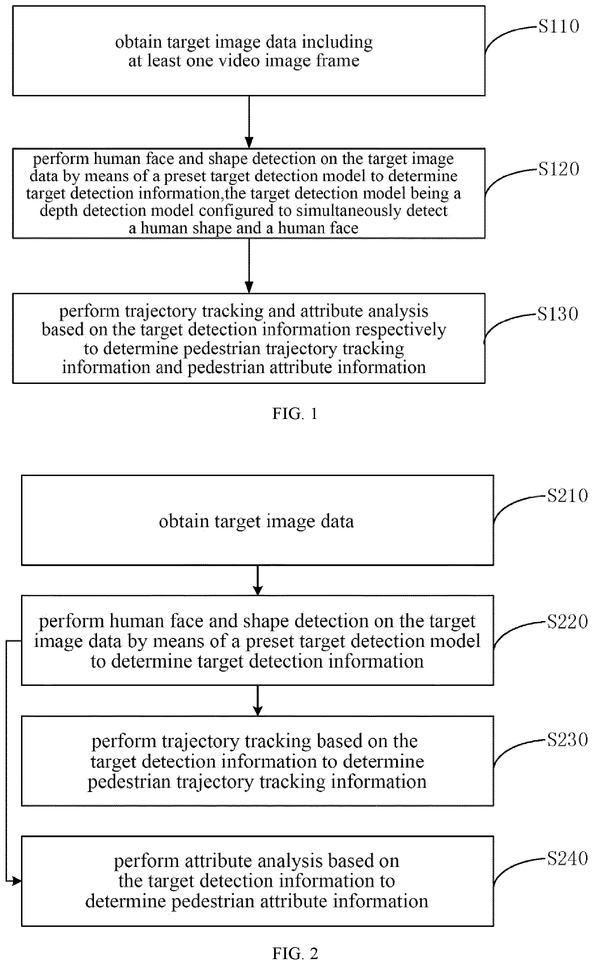

FIG. 1 is a flowchart of a method for structuring pedestrian information according to an embodiment of the present disclosure. This embodiment is applicable to a case of structuring pedestrian data in video data. The method may be executable by a device for structuring pedestrian information. The device may be implemented in software and/or hardware, and configured in an electronic apparatus, such as a server or a terminal apparatus. Typical terminal apparatus include mobile terminals, such as mobile phones, computers, or tablet computers, and so on. As shown in FIG. 1, the method may include the following steps.

At S 110, target image data including at least one video image frame is obtained.

The target image data are to-be-recognized image data obtained after processing the video data in a monitoring device of each security scene. Data in the target image data increase with the growth of the video data in practical applications. The embodiment does not limit the number of video image frames included in the target image data. Currently, the number may reach terabytes (TB), for example, 66TB data are generated every second.

In an embodiment, in order to obtain target image data, the method may include: obtaining original video data, and decoding the original video data to obtain the target image data. The original video data are the video data obtained in the actual security scene. After the original video data are obtained, the original video data may be decoded by means of a graphics processing unit (GPU) to obtain a plurality of video image frames, i.e., the target image data. A decoding mode is not limited in this embodiment. For example, hard decoding may be adopted.

At S 120, human face and shape detection is performed on the target image data by means of a preset target detection model to determine target detection information. The target detection model is a deep detection model configured to simultaneously detect a human shape and a human face.

The target detection model may be a deep detection model based on a neural network, and is configured to simultaneously detect a human shape and a human face.

In the embodiment, a trained target detection model can be obtained by pre-training an initial deep detection network. A specific training process may include: obtaining sample image data, and inputting the sample image data into the initial deep detection network for training, to obtain the target detection model.

In order to obtain sample image data, the method may include: obtaining a plurality of video image frames based on the original video data, and performing data cleaning and data annotation on the plurality of video image frames to obtain the sample image data. The sample image data include a large number of annotated video image frames, and the number is not limited in the embodiment and may be set according to actual situations. The data cleaning refers to deleting video image frames having no target or having blurred targets. Because these image frames will have a severely negative effect for training model, they should be cleaned and removed to obtain a clean set of image frames. The data annotation refers to annotating the clean video image frames obtained after the data cleaning. In the embodiment, two types of targets (i.e., a human face and a human shape) need to be annotated simultaneously to generate an annotation file including coordinates of an upper left vertex, and size of a box enclosing the target and category information. Each video image frame corresponds to one annotation file, thereby generating the sample image data.

In an embodiment, the step of performing human face and shape detection on the target image data by means of a preset target detection model to determine target detection information may include: performing feature extraction on the target image data to obtain a target feature map; and classifying and locating the target feature map by means of a target anchor box to determine the target detection information, a size of the target anchor box being adaptively adjusted based on a human face and shape location relationship. The target detection information may include information such as a detection box in which the human face and/or the human shape are detected.

After the target image data are obtained, the target image data may be first scaled to a set scale to facilitate subsequent processing, where the set scale may be set according to actual situations. Then, the scaled target image data are inputted into a convolutional neural network in the target detection model for feature extraction to obtain a series of feature maps, with the size of each feature map gradually reduced. For example, six feature maps {F1, F2, F3, F4, F5, F6} may be obtained by performing feature extraction on the target image data. The scale of F1 is 1/4 of the size of the target image data, F2 is 1/8 of the size of the target image data, and so on, and F6 is 1/128 of the size of the target image data.

In an embodiment, after performing feature extraction on the target image data to obtain a target feature map, the method may further include: performing feature fusion on the target feature map by means of a feature pyramid to determine a feature fusion map. Different target feature maps are fused by means of feature pyramid pooling. For the six target feature maps {F1, F2, F3, F4, F5, F6}, adjacent scale feature fusion is performed downward from F4, and P3 may be generated by fusion of F4 and F3. The operation process may include: first inputting a small scale feature of F4 into the convolutional network and upsampling the inputted feature based on bilinear interpolation, and then calculating a dot product of the upsampled feature and a shallow large-scale feature of F3 that also has been subjected to convolution. The shallow feature and the high-level feature upsampled have the same scale, and a result of fusion of the two features can be obtained by calculating a dot product of them. Similarly, P2 may be generated by fusion of P3 and F2, P1 may be generated by fusion of P2 and F1, and P4, P5 and P6 may be generated by performing convolution on F4, F5, and F6. Finally, a feature pyramid set {PI, P2, P3, P4, P5, P6} (i.e., the feature fusion map) having the same size and number of channels as an original feature set is generated.

In the embodiment, the target feature map may be directly classified and located. Alternatively, feature fusion may be performed on the target feature map by means of the feature pyramid to obtain a fusion feature map, and then the fusion feature map is classified and located. The step of feature fusion based on the feature pyramid can effectively reduce negative effects caused by scale difference between the human shape and the human face.

In an embodiment, the step of classifying and locating the target feature map by means of a target anchor box to determine the target detection information may include: converting the target feature map or the feature fusion map into a three-channel heat map; and classifying and locating the three-channel heat map by means of the target anchor box to determine the target detection information. The three-channel heat map is a category heat map, including three categories, i.e., a backdrop, a human shape, and a human face, which are configured for classifying each point to determine pixel points containing targets. In an embodiment, the target feature map or feature fusion map is converted into a three-channel heat map by means of convolution and activation functions. The three-channel heat map is preliminarily determined regions where the targets may exist by means of the convolution and activation functions to preliminarily. Then a size and a position of each of the targets are determined by means of another convolutional network. Length and width scales have a large variation range, which may be compressed to [-1, 1]. A length and a width of target anchor boxes in which each pixel point may appear are fitted according to the obtained position information and the predicted target size, to realize the adaptation of the target anchor box. In this way, the detection of the human face and the human shape is achieved.

The target detection model in the embodiment adopts a self-adaptive deep detection model based on the human shape and face location relationship, the feature pyramid, and the size of the anchor box. The target detection model may detect the human shape and the human face simultaneously, and may also detect the human shape or the human face separately. In other words, when both the human shape and the human face exist in the video image frame, the human shape and the human face may be detected simultaneously. When only the human face or the human shape exists in the video image frame, the human face or human the shape may be detected separately. By means of the human face and shape location relationship, a proportion and the size of the anchor box can be well adjusted adaptively. In addition, middle and high-level features of the convolutional neural network carry high-level semantic information and a larger receptive field, and thus are suitable for detecting larger targets. The shallow features have low-level detailed semantic information and a smaller receptive field, and thus are suitable for detecting smaller targets. Therefore, in the embodiment, by fusing the middle and high-level features and the shallow features by means of the feature pyramid, semantics of the shallow features is increased, which can effectively reduce negative effects caused by scale difference between the human shape and the human face. Traditional detection algorithms based on the anchor box rely heavily on rationality of setting of the anchor box. Different datasets and algorithms require separate adjustment of the scale, length-width ratio, density and so on of the anchor box. To simultaneously adapt to the two targets (i.e., the human shape and the human face) having larger differences in scale and length-width ratio, the size of the target anchor box in the embodiment can be automatically learned and adjusted for parameters such as location, length and width, which solves the problem that the anchor box must be preset.

At S130, trajectory tracking and attribute analysis are respectively performed based on the target detection information to determine pedestrian trajectory tracking information and pedestrian attribute information.

The target detection information may include information such as a detection box in which the human face or the human shape is detected.

In an embodiment, the detection box in the target detection information is used as a candidate box for trajectory tracking, and the target feature map is obtained by performing feature extraction on the target image data in the detection process of extracting the human face and the human shape, and then trajectory tracking is performed based on the above candidate box and the target feature map to obtain the pedestrian trajectory tracking information.

By means of the detection box in the target detection information, a corresponding image can be segmented from the video image frame to perform attribute analysis for structuring pedestrian information. Recognition and regression operations are performed on the image corresponding to the detection box in the target detection information to obtain the pedestrian attribute information. In the embodiment, an information type of the pedestrian attribute information is not limited. For example, the pedestrian attribute information may include facial features, gender, age, and pedestrian re-recognition, and the like.

The method for structuring pedestrian information in the embodiment can implement visual analysis such as locating and recognition, attribute analysis, and trajectory tracking of pedestrians in public places, and thus can quickly implement functions such as suspect tracking, boundary violation alarm, and crowd gathering alarm.

According to the technical schemes of the embodiment, target image data including at least one video image frame are obtained. Human face and shape detection is performed on the target image data by means of a preset target detection model to determine target detection information, where the target detection model is a deep detection model configured to simultaneously detect a human shape and a human face. Trajectory tracking and attribute analysis are respectively performed based on the target detection information to determine the pedestrian trajectory tracking information and the pedestrian attribute information. According to the technical schemes of the embodiment of the present disclosure, the human shape and the human face can be simultaneously detected by means of the pre-constructed deep detection model, which avoids resource consumption and time consumption for computation caused by calling a plurality of detection models, thus reducing detection time and resources. Further, the step of directly performing trajectory tracking and attribute analysis based on a result of detection of the human face and the human shape can further reduce bandwidth and resource consumptions, which can improve recognition efficiency while ensuring accuracy, thus ensuring real-time recognition.

FIG. 2 is a flowchart of another method for structuring pedestrian information according to an embodiment of the present disclosure. The embodiment further optimizes the above method for structuring pedestrian information on the basis of the above embodiment. Correspondingly, as shown in FIG. 2, the method of this embodiment includes the following steps.

At S210, target image data is obtained.

The target image data may include at least one video image frame. In an embodiment, the obtaining target image data may include: obtaining original video data, and decoding the original video data to obtain the target image data.

At S220, human face and shape detection is performed on the target image data by means of a preset target detection model to determine target detection information.

The target detection model is a deep detection model configured to simultaneously detect a human shape and a human face.

In an embodiment, the step of performing human face and shape detection on the target image data by means of a preset target detection model to determine target detection information may include: performing feature extraction on the target image data to obtain a target feature map; and classifying and locating the target feature map by means of a target anchor box to determine the target detection information, a size of the target anchor box being adaptively adjusted based on a human face and shape location relationship.

In an embodiment, after performing feature extraction on the target image data to obtain a target feature map, the method may further include: performing feature fusion on the target feature map by means of a feature pyramid to determine a feature fusion map.

Further, the step of recognizing the target feature map by means of a target anchor box to determine the target detection information may include: converting the target feature map or the feature fusion map into a three-channel heat map; and classifying and locating the three-channel heat map by means of the target anchor box to determine the target detection information.

After S220, S230 and S240 may be performed simultaneously. Alternatively, S230 and S240 may be performed in sequence, and the specific sequence is not limited. That is, S230 may be performed prior to S240, or S240 may be performed prior to S230.

At S230, trajectory tracking is performed based on the target detection information to determine pedestrian trajectory tracking information.

The target detection information may include information such as a detection box in which the human face or the human shape is detected.

In an embodiment, the step of performing trajectory tracking based on the target detection information to determine pedestrian trajectory tracking information may include: after fusing color features for the target detection information and the target feature map, performing trajectory tracking based on a generalized intersection over union (IoU) algorithm to determine the pedestrian trajectory tracking information. A detection box in the target detection information is used as a candidate box for trajectory tracking, and the target feature map is obtained by performing feature extraction on the target image data in the detection process of extracting the human face and the human shape.

Firstly, a color feature of each candidate box region is calculated by means of a color feature extraction algorithm, where the color feature and the target feature map are composed into a feature vector of a target appearance feature, and a distance between a feature vector of each candidate box in a current frame and a feature vector of each tracked target in a previous frame is calculated, to obtain an appearance feature similarity matrix A between each candidate box and the tracked target of the previous frame. Secondly, a generalized intersection over union (IoU) between the feature vector of each detection box in the frame and the feature vector of each tracked target in the previous frame is calculated to obtain a generalized IoU similarity matrix I. Thirdly, the two matrices A and I are fused based on a coefficient α to obtain a final similarity matrix S. Finally, the similarity matrix S is processed by means of a matching algorithm to complete assignment of each candidate box and each tracked target of the previous frame, thereby obtaining a set of matched tracked targets, a set of unmatched tracked targets, and a set of unmatched candidate boxes. The above matching algorithm is not limited in the embodiment. For example, the matching algorithm may be a Hungarian algorithm or a graph matching algorithm. The above-mentioned tracked target may be a human face or a human shape, and the human shape is generally used.

The set of matched tracked targets may refer to a set of targets that exist in the candidate boxes and are successfully tracked. Trajectory information of a target in this set is updated, where the trajectory information may include an abscissa and an ordinate of an upper left corner of the target, a size of the target, an appearance feature of the target, and a current state of the target, and the like. The set of unmatched candidate boxes may refer to a set of targets that exist in the candidate boxes but are not successfully tracked, indicating that tracking of the tracked target has not started. The candidate box in this set may be regarded as a new target, and a new tracking trajectory may be established. ID information, location information and scale information of the new target are then initialized. The set of unmatched tracked targets may refer to a set of targets that exist in a candidate box initially but have no matched candidate box halfway. That is, the targets cannot be tracked due to blocking and other reasons. Then, it is determined whether unmatched tracking time of targets in this set is greater than a time threshold. The targets whose unmatched tracking time is greater than the time threshold are deleted, and the targets whose unmatched tracking time is less than or equal to the time threshold are retained. After the above three sets are processed, a trajectory tracking result obtained includes information such as ID of the targets, trajectory length, and trajectory frame location. The trajectory tracking result is saved.

At S240, attribute analysis is performed based on the target detection information to determine pedestrian attribute information.

In an embodiment, the step of performing attribute analysis based on the target detection information to determine pedestrian attribute information may include: determining a target image based on the target detection information; and after performing backdrop filtering on the target image, performing recognition and regression operations by means of an attribute analysis model to determine the pedestrian attribute information. The target image is an image corresponding to the detection box in the target detection information, i.e., an image captured from the video image frame by means of the detection box.

The attribute analysis model is a deep neural network model configured to analyze the pedestrian attribute information, and the attribute analysis model in this embodiment is also pre-trained. A training process may include: obtaining sample image data, and inputting the sample image data into an initial attribute analysis network for training to obtain the attribute analysis model. The step of obtaining sample image data may include: obtaining a plurality of video image frames based on the original video data, and performing data cleaning and data annotation on the plurality of video image frames to obtain the sample image data. The sample image data include a large number of annotated video image frames, and the number is not limited in the embodiment and may be set according to actual situations. Data cleaning refers to deleting video image frames having no target or having blurred targets to obtain a clean set of image frames. The data annotation refers to annotating the clean video image frames obtained after the data cleaning, segmenting corresponding image blocks from the original image by means of a detection and annotation coordinate box, and then annotating attribute information required for task analysis, such as gender and age of the image blocks. The detection and annotation coordinate box is a detection box of the targets manually determined.

Backdrop filtering is performed on images corresponding to the detection box in the target detection information by means of an attention mechanism, which can effectively remove background noises in the image blocks. The backdrop filtering process is as follows. Firstly, the inputted image block is subjected to convolution transformation to obtain H^{∗}W^{∗}C features, where H represents a height of the feature map, W represents a width of the feature map, and C represents the number of channels. Secondly, global pooling is performed on the obtained features to achieve compression of the features. Thirdly, the compressed features are connected to a fully-connected layer to measure correlation between feature channels to obtain corresponding weights of the features, and the weights are normalized by means of a normalized function. Finally, the obtained weights are weighted to each channel feature by means of a scale operation. That is, re-calibration of the features is implemented, and the backdrop filtering is completed.

After features of the images corresponding to the detection box in the target detection information are obtained by backdrop filtering, recognition and regression operations are performed on these features by means of an attribute analysis model to obtain the pedestrian attribute information. In the embodiment, an information type of the pedestrian attribute information is not limited. For example, the pedestrian attribute information may include facial features, gender, age, and pedestrian re-recognition, and the like.

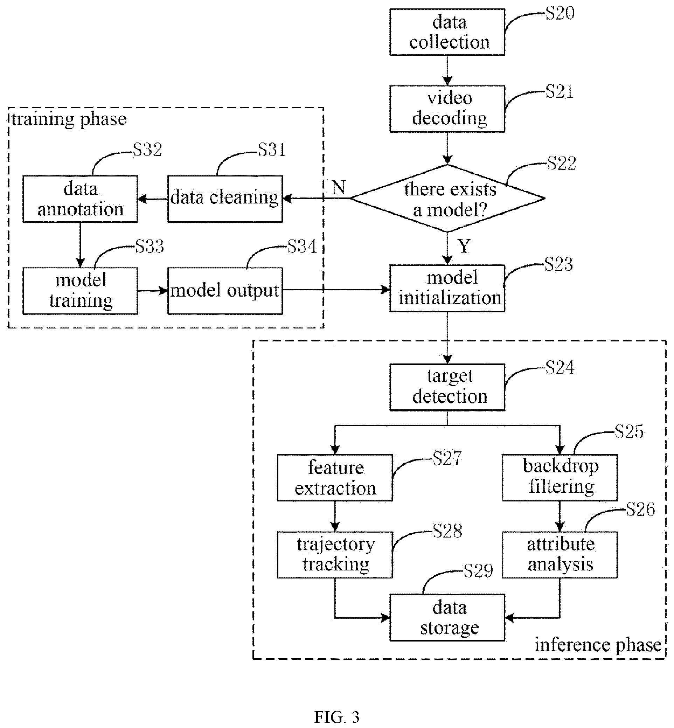

On the basis of the above embodiment, the method for structuring pedestrian information in this embodiment is described based on FIG. 3. FIG. 3 is a flowchart of yet another method for structuring pedestrian information according to an embodiment of the present disclosure. This method may include the following steps. At S20, data collection is performed. A monitoring device (such as a camera) continuously collects original video data of a monitored region. At S21, video decoding is performed. The collected original video data are hard-decoded by means of a graphics processing unit (GPU) to obtain target image data including at least one video image frame. At S22, it is determined whether a model presents or not, such as whether a trained target detection model and an attribute analysis model of the human face and human shape already presents. S23 is performed if a determination result is Y; otherwise, S31 to S34 are performed, and a training phase is started to train the model. At S23, model is initialized. Related parameters such as an output size and a batch size of each functional module are configured to prepare for subsequent analysis. At S24, target detection is performed. The target image data generated in S21 are received, and the target detection model is activated to perform human face and human shape detection on the target image data by means of the target detection model to determine target detection information. After S24, S25-S26 and S27-S28 may be executed respectively based on the target detection information, and the execution sequence is not limited. At S25, backdrop is filtered. The step of backdrop filtering is performed on images corresponding to the detection box in the target detection information by means of an attention mechanism. At S26, attribute analysis is performed. After the step of backdrop filtering is performed on the images corresponding to the detection box in the target detection information, recognition and regression operations are performed on these features to obtain the pedestrian attribute information. Then, S29 is performed. At S27, feature is extracted. The target feature map is obtained by feature extraction of the target image data in the process of extracting target detection. The detection box in the target detection information is used as a candidate box for trajectory tracking. A color feature of each candidate box region is extracted. At S28, trajectory is trackedd. For the target feature map and the color feature, trajectory tracking is carried out based on the generalized IoU algorithm to determine the pedestrian trajectory tracking information. After that, S29 is performed. At S29, data is stored. The target detection information including the human face and the human shape, the pedestrian attribute information and the pedestrian trajectory tracking information is stored. The above S24-S29 are inference phases of pedestrian data.

The sample image data in the training phase also come from S21. Apart of the original video data may be obtained first, and the video image frames obtained after hard-decoding of the original video data are used as the sample image data to train the target detection model and the attribute analysis model. The training phase may include steps S31-S34, which are S31: data cleaning; S32: data annotation; S33: model training; and S34: model output.

In the embodiment, resource consumption and time consumption for computation caused by calling a plurality of detection models are greatly reduced. With the method of this embodiment, accurate location of the human shape and the human face may be carried out simultaneously, and thus detection time and resources can be reduced. In addition, in the embodiment, bandwidth consumption and number of times of running the feature extraction model are greatly reduced. The trajectory tracking part uses the detection box obtained after target detection, thus avoiding the bandwidth consumption caused by transmission of the original images. Further, the feature map used in the trajectory tracking part is the feature map that has been obtained in the target detection process, such that the number of times of calling the model for feature extraction is reduced, thereby reducing the resource consumption. In the embodiment, the accuracy of attribute analysis is greatly improved, and a filtering module is proposed based on the attention mechanism, which can effectively remove background noises in image blocks and highlight target pixels, thereby improving the accuracy of recognition and regression. In the embodiment, speed can be increased while ensuring the accuracy, and real-time performance of a system for structuring pedestrian information can be ensured. Due to the design of the self-adaptive anchor box and the structure of the feature pyramid, the target detection part effectively ensures the accuracy of detection of the human face and human shape, and the trajectory tracking and the attribute analysis use the result of the target detection part respectively, thereby effectively improving the processing speed.

In the embodiment of the present disclosure, target image data including at least one video image frame are obtained. Human face and shape detection is performed on the target image data by means of a preset target detection model to determine target detection information. Trajectory tracking is performed based on the target detection information to determine the pedestrian trajectory tracking information. Attribute analysis is performed based on the target detection information to determine the pedestrian attribute information. According to the technical schemes of this embodiment, the human shape and the human face may be simultaneously detected by means of the pre-constructed deep detection model, which avoids resource consumption and time consumption for computation caused by calling a plurality of detection models, thus reducing detection time and resources, improving recognition efficiency while ensuring accuracy, and ensuring real-time recognition. Further, trajectory tracking and attribute analysis may be performed based on the target detection information, which can greatly reduce bandwidth and resource consumptions, and further improve the processing speed.

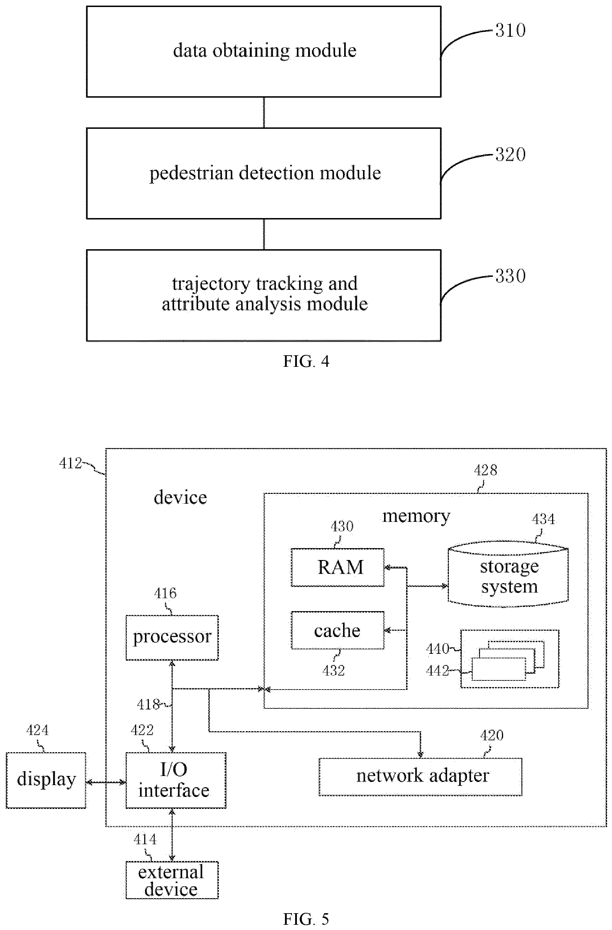

FIG. 4 is a schematic structural diagram of a device for structuring pedestrian information according to an embodiment of the present disclosure. This embodiment is applicable to a situation in which pedestrian data in video data are structured. The device for structuring pedestrian information provided in the embodiment of the present disclosure can perform the method for structuring pedestrian information provided by any embodiment of the present disclosure, and has corresponding functional modules configured to perform the method and beneficial effects.

The device may include a data obtaining module 310, a pedestrian detection module 320, and a trajectory tracking and attribute analysis module 330.

The data obtaining module 310 is configured to obtain target image data including at least one video image frame.

The pedestrian detection module 320 is configured to perform human face and shape detection on the target image data by means of a preset target detection model to determine target detection information, where the target detection model is a deep detection model configured to simultaneously detect a human shape and a human face.

The trajectory tracking and attribute analysis module 330 is configured to respectively perform trajectory tracking and attribute analysis based on the target detection information to determine pedestrian trajectory tracking information and pedestrian attribute information.

In the embodiment of the present disclosure, target image data including at least one video image frame are obtained. Human face and shape detection is performed on the target image data by means of a preset target detection model to determine target detection information, where the target detection model is a deep detection model configured to simultaneously detect a human shape and a human face. Trajectory tracking and attribute analysis are respectively performed based on the target detection information to determine the pedestrian trajectory tracking information and the pedestrian attribute information. According to the technical schemes of the embodiment of the present disclosure, the human shape and the human face can be simultaneously detected by means of the pre-constructed deep detection model, which avoids resource consumption and time consumption for computation caused by calling a plurality of detection models, thus reducing detection time and resources. In addition, the step of directly performing trajectory tracking and attribute analysis based on a result of detection of the human face and the human shape can further reduce bandwidth and resource consumptions, which can improve recognition efficiency while ensuring accuracy, thus ensuring real-time recognition.

In an embodiment, the data obtaining module 310 is configured to perform the following step.

Original video data is obtained, and decoded to obtain the target image data.

In an embodiment, the pedestrian detection module 320 includes a feature extraction unit and a detection unit.

The feature extraction unit is configured to perform feature extraction on the target image data to obtain a target feature map.

The detection unit is configured to classify and locate the target feature map by means of a target anchor box to determine the target detection information, where a size of the target anchor box is adaptively adjusted based on a human face and shape location relationship.

In an embodiment, the pedestrian detection module 320 further includes a feature fusion unit.

The feature fusion unit is configured to perform feature extraction on the target image data, and perform, after obtaining a target feature map, feature fusion on the target feature map by means of a feature pyramid to determine a feature fusion map.

In an embodiment, the detection unit is configured to perform the following steps.

The target feature map or the feature fusion map are converted into a three-channel heat map.

The three-channel heat map is classified and located by means of the target anchor box to determine the target detection information.

In an embodiment, the trajectory tracking and attribute analysis module 330 includes a trajectory tracking unit.

The trajectory tracking unit is configured to perform, after fusing color features for the target detection information and the target feature map, trajectory tracking based on a generalized intersection over union (IoU) algorithm to determine the pedestrian trajectory tracking information.

In an embodiment, the trajectory tracking and attribute analysis module 330 includes an attribute analysis unit.

The attribute analysis unit is configured to determine a target image based on the target detection information, and perform, after performing backdrop filtering on the target image, recognition and regression operations by means of an attribute analysis model to determine the pedestrian attribute information.

The device for structuring pedestrian information provided by the embodiment of the present disclosure can perform the method for structuring pedestrian information provided by any embodiment of the present disclosure, and has corresponding functional modules configured to perform the method and beneficial effects.

FIG. 5 is a schematic structural diagram of an apparatus according to an embodiment of the present disclosure. FIG. 5 illustrates a block diagram of an apparatus 412 configured to implement the embodiments of the present disclosure. The apparatus 412 as shown in FIG. 5 is merely an example, and no limitation should be imposed on functions or scope of use of the embodiments of the present disclosure.

As shown in FIG. 5, the apparatus 412 is shown as a generic apparatus. Components of the apparatus 412 may include, but are not limited to, one or more processors 416, a memory 428, and a bus 418 for connecting different system components (including the memory 428 and the processors 416).

The bus 418 may represent one or more of a plurality of bus structures, including a memory bus or memory controller, a peripheral bus, an accelerated graphics port, a processor or a local bus using any bus structure among the plurality of bus structures. For example, these architectures include, but are not limited to, Industry Subversive Alliance (ISA) buses, Micro Channel Architecture (MAC) buses, enhanced ISA buses, Video Electronics Standards Association (VESA) local buses, and Peripheral Component Interconnect (PCI) buses.

The apparatus 412 typically includes a variety of computer system readable media. These media may be any available media accessible to the apparatus 412, including volatile and non-volatile media, and removable and non-removable media.

The memory 428 may include computer system readable media in the form of volatile memory, such as random access memory (RAM) 430 and/or cache memory 432. The apparatus 412 may further include other removable/non-removable, or volatile/non-volatile computer system storage media. For example only, a storage system 434 may be configured to read and write to non-removable, non-volatile magnetic media (not shown in FIG. 5, commonly referred to as "hard disc drive"). Although not shown in FIG. 5, a magnetic disc drive may be provided for reading and writing to removable non-volatile magnetic discs (e.g., "floppy discs"), as well as removable non-volatile optical discs, such as Compact Disc Read-Only Memory (CD-ROM), Digital Video Disc-Read Only Memory (DVD-ROM), or optical disc drives for reading and writing by other optical media. In these cases, each drive may be connected to the bus 418 by means of one or more data media interfaces. The memory 428 may include at least one program product having a set of (e.g., at least one) program modules configured to perform the functions of various embodiments of the present disclosure.

A program/utility 440 having a group of (at least one) program modules 442 may be stored in, for example, the memory 428. Such program modules 442 include, but are not limited to: operating systems, one or more applications, other program modules and program data. Each or a certain combination of these examples may include implementation of network environment. The program modules 442 generally perform the functions and/or methods of the embodiments described in the present disclosure.

The apparatus 412 may also communicate with one or more external apparatus 414 (e.g., keyboards, pointing terminals, display 424, and so on), may also communicate with one or more terminals that enable a user to interact with the apparatus 412, and/or communicate with any terminal (e.g., a network card, a modem, etc.) that enables the apparatus 412 to communicate with one or more other computing terminals. This communication may be implemented by means of an input/output (I/O) interface 422. Further, the apparatus 412 may also communicate with one or more networks (e.g., Local Area Network (LAN), Wide Area Network (WAN), and/or public networks such as the Internet) by means of a network adapter 420. As shown in FIG. 5, the network adapter 420 communicates with other modules of the apparatus 412 by means of the bus 418. It should be understood that although not shown, other hardware and/or software modules may be used in conjunction with the apparatus 412, including but not limited to: microcode, terminal drivers, redundant processors, external disc drive arrays, Redundant Arrays of Independent disks (RAID) systems, tape drives, and data backup storage systems, etc.

The processor 416 executes various functional applications and data processing by running the programs stored in the memory 428, for example, implementing the method for structuring pedestrian information provided by the embodiments of the present disclosure. The method includes the following step.

Target image data including at least one video image frame is obtained.

Human face and shape detection is performed on the target image data by means of a preset target detection model to determine target detection information. The target detection model is a deep detection model configured to simultaneously detect a human shape and a human face.

Trajectory tracking and attribute analysis are respectively performed based on the target detection information to determine pedestrian trajectory tracking information and pedestrian attribute information.

The embodiments of the present disclosure also provide a computer-readable storage medium storing a computer program which, when executed by a processor, causes the processor to carry out the method for structuring pedestrian information provided by the embodiments of the present disclosure. The method includes the following steps.

Target image data including at least one video image frame is obtained.

Human face and shape detection is performed on the target image data by means of a preset target detection model to determine target detection information. The target detection model is a deep detection model configured to simultaneously detect a human shape and a human face.

Trajectory tracking and attribute analysis are respectively performed based on the target detection information to determine pedestrian trajectory tracking information and pedestrian attribute information.

The computer storage medium of the embodiments of the present disclosure may adopt any combination of one or more computer-readable media. The computer-readable medium may be a computer-readable signal medium or a computer-readable storage medium. The computer-readable storage medium may be, for example, but not limited to, electronic, magnetic, optical, electromagnetic, infrared, or semiconductor system, apparatus, or device, or any combination of the foregoing. More specific examples (a non-exhaustive list) of the computer-readable storage medium include: electrical connection having one or more wires, portable computer diskette, hard disc, random access memory (RAM), read-only memory (ROM), erasable programmable read-only memory (EPROM or Flash memory), optical fiber, portable compact disc read-only memory (CD-ROM), optical memory, magnetic memory, or any suitable combination of the foregoing. In the present disclosure, the computer-readable storage medium may be any tangible medium that contains or stores a program for use by or in connection with an instruction execution system, apparatus, or device.

The computer-readable signal medium may include a data signal propagated in baseband or as part of a carrier wave in which computer-readable program code is embodied. Such a propagated data signal may take any of a variety of forms, including, but not limited to, electro-magnetic, optical, or any suitable combination thereof. The computer-readable signal medium also may be any computer-readable medium that is not a computer-readable storage medium and that can transmit, propagate, or transport a program for use by or in connection with an instruction execution system, apparatus, or device.

The program code embodied on the computer-readable medium may be transmitted using any appropriate medium, including but not limited to wireless, wireline, optical fiber cable, RF, etc., or any suitable combination of the foregoing.

The computer program code for carrying out operations of the present disclosure may be written in one or more programming languages or any combination thereof, including an object-oriented programming language such as Java, Smalltalk, C++ and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or a terminal. In a scenario involved with the remote computer, the remote computer may be coupled to the user's computer by means of any type of network, including a local area network (LAN) or a wide area network (WAN), or may be coupled to an external computer (for example, through the Internet by means of an Internet Service Provider).

It is to be noted that the foregoing embodiments are merely preferred embodiments of the present disclosure and technical principles used thereby. Those having ordinary skills in the art may understand that the present disclosure is not limited to the specific embodiments described herein, and those having ordinary skills in the art may make various obvious changes, readjustments and substitutions without departing from the scope of protection of the present disclosure. Therefore, although reference is made to the present disclosure in more detail in the foregoing embodiments, the present disclosure is not merely limited to the foregoing embodiments. Other equivalent embodiments may be further included without departing from the conception of the present disclosure, and the scope of the present disclosure depends on the scope of the appended claims.

## Claims

1. A method for structuring pedestrian information, comprising:
obtaining target image data comprising at least one video image frame;
performing human face and shape detection on the target image data by means of a preset target detection model to determine target detection information, the target detection model being a deep detection model configured to simultaneously detect a human shape and a human face; and
respectively performing trajectory tracking and attribute analysis based on the target detection information to determine pedestrian trajectory tracking information and pedestrian attribute information.

2. The method of claim 1, wherein the step of obtaining target image data comprises:
obtaining original video data, and decoding the original video data to obtain the target image data.

3. The method of claim 1, wherein the step of performing human face and shape detection on the target image data by means of a preset target detection model to determine target detection information comprises:
performing feature extraction on the target image data to obtain a target feature map; and
classifying and locating the target feature map by means of a target anchor box to determine the target detection information, a size of the target anchor box being adaptively adjusted based on a human face and shape location relationship.

4. The method of claim 3, wherein after performing feature extraction on the target image data to obtain a target feature map, the method further comprises:
performing feature fusion on the target feature map by means of a feature pyramid to determine a feature fusion map.

5. The method of claim 3 or 4, wherein the step of classifying and locating the target feature map by means of a target anchor box to determine the target detection information comprises:
converting the target feature map or the feature fusion map into a three-channel heat map; and
classifying and locating the three-channel heat map by means of the target anchor box to determine the target detection information.

6. The method of claim 3, wherein the step of performing trajectory tracking based on the target detection information to determine pedestrian trajectory tracking information comprises:
after fusing color features for the target detection information and the target feature map, performing trajectory tracking based on a generalized intersection over union algorithm to determine the pedestrian trajectory tracking information.

7. The method of claim 1, wherein the step of performing attribute analysis based on the target detection information to determine pedestrian attribute information comprises:
determining a target image based on the target detection information; and
after performing backdrop filtering on the target detection information, performing recognition and regression operations by means of an attribute analysis model to determine the pedestrian attribute information.

8. A device for structuring pedestrian information, comprising:
a data obtaining module, configured to obtain target image data comprising at least one video image frame;
a pedestrian detection module, configured to perform human face and shape detection on the target image data by means of a preset target detection model to determine target detection information, the target detection model being a deep detection model configured to simultaneously detect a human shape and a human face; and
a trajectory tracking and attribute analysis module, configured to respectively perform trajectory tracking and attribute analysis based on the target detection information to determine pedestrian trajectory tracking information and pedestrian attribute information.

9. An apparatus, comprising:
at least one processor; and
a memory, configured to store at least one program;
wherein the at least one program, when executed by the at least one processor, causes the at least one processor to perform the method for structuring pedestrian information of any one of claims 1 to 7.

10. A computer-readable storage medium, storing a computer program which, when executed by a processor, causes the processor to perform the method for structuring pedestrian information of any one of claims 1 to 7.
